(19) Europäisches Patentamt
European Patent Office
Office européen des brevets

(11) **EP 1 898 757 B1**

(12) **EUROPEAN PATENT SPECIFICATION**

(45) Date of publication and mention
of the grant of the patent:
**02.09.2009 Bulletin 2009/36**

(51) Int Cl.:
***A47J 31/56*** *(2006.01)*

(21) Application number: **05750140.5**

(86) International application number:
**PCT/IT2005/000279**

(22) Date of filing: **17.05.2005**

(87) International publication number:
**WO 2006/123370 (23.11.2006 Gazette 2006/47)**

(54) **APPLIANCE FOR PRODUCING HOT DRINKS**

VORRICHTUNG ZUR ZUBEREITUNG VON HEISSGETRÄNKEN

APPAREIL POUR PRODUIRE DES BOISSONS CHAUDES

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**19.03.2008 Bulletin 2008/12**

(73) Proprietor: **Tenacta Group S.p.A.**
**24052 Azzano S. Paolo (BG) (IT)**

(72) Inventor: **MORGANDI, Arturo**
**I-24052 Azzano S.Paolo (BG) (IT)**

(74) Representative: **Giannesi, Simona et al**
**Porta, Checcacci & Associati S.p.A.**
**Via Trebbia, 20**
**20135 Milano (IT)**

(56) References cited:
**EP-A- 1 433 403          US-A- 3 100 434**
**US-A- 6 164 189**

## Description

The present invention relates to an appliance for producing hot drinks such as, for example, coffee, tea, milk, chocolate, cappuccino, barley coffee,' infusion.

Appliances for producing hot drinks known in the art typically comprise a water tank at atmospheric pressure, a boiler (or an instant hot water generator) for heating the water comprising an electrical resistance, a pump for feeding water from the tank to the boiler, a seat for containing the product for producing the drink and a duct for providing hot water under pressure from the boiler to the seat containing the product, so as to produce the hot water through the flow of hot water through the product contained into the seat.

The product may be, for example, in the form of loose powder, granules or small leaves or pre-packaged into suitable bags, wafers or capsules.

The boiler is typically associated with a temperature sensor for directly or indirectly sensing the temperature of water contained therein and control means adapted to switch on/switch off the electrical resistance based on the temperature detected by the temperature sensor so as to keep the water temperature into the boiler at a predefined temperature.

US 6 164 189 discloses a heated water dispensing apparatus comprising a hot water reservoir comprising a heater; a dispense valve and a faucet for feeding hot water from the hot water reservoir to a container; a temperature sensor for sensing the temperature of water in the reservoir; a first inlet valve coupled to a first water inlet for heated water; a second inlet valve coupled to a second water inlet for unheated water; an outlet valve coupled to a water outlet; a first water inlet temperature sensor and a second water inlet temperature sensor for sensing the temperature of the water from the heated water source and the temperature of the water from the unheated water source; and a controller for selectively operating the inlet valves, outlet valve and heater retained in the reservoir to produce water of the selected temperature in the reservoir.

US 3 100 434 discloses a coffee making machine comprising an auxiliary water tank comprising a high wattage heater; a spray head to distribute hot water over ground coffee positioned on a filter; a discharge water line for feeding hot water from the auxiliary water tank to the spray head; a main water tank comprising a low wattage heater and having a fluid tight connection with the auxiliary water tank. The low wattage heater is energized through normally closed contacts controlled by a thermostat having a probe located at the upper end of the main water tank. The thigh wattage heater is energized by normally closed contacts that are operated by a thermostat under the control of a probe which is located in an enlarged section of the discharge water line for measuring the temperature of the water flowing to the spray head.

The Applicant has noted that the quality of hot drinks produced by known appliances is not constant and that, in general, it varies according to the operating condition of the appliance. In particular, the quality of the hot drink is typically worse when the appliance is switched on or when the appliance, even if kept on, .is used for the production of a limited number of drinks, at relatively long time intervals. Quality, on the other hand, generally improves as the number of drinks subsequently produced, one after the other, increases.

The Applicant has thus faced the technical problem of providing an appliance which allows the quality of the hot drinks produced to be improved.

In particular, the Applicant has faced the technical problem of providing an appliance which allows a good quality to be obtained, irrespective of how the appliance is used.

The Applicant has perceived that this can be obtained by a suitable control of the temperature of the water that reaches the product.

In fact, the Applicant has noted that, in general, in order to optimise the quality of a hot drink, it is important to keep the temperature of hot water reaching the product and passing therethrough constantly within a well-defined optimal range of temperatures. This, for example, is especially important for oil-containing products, such as coffee, for which water temperatures above a certain maximum value (for example 95°C) can "burn" the oils contained therein and, thereby, produce a bitterish taste of the drink while water temperatures below a certain minimum value (for example 90°C) can produce a drink lacking in cream.

Moreover, the applicant.has perceived that the temperature of the hot water that reaches the product does not depend only on the temperature of the water contained into the boiler (or in the instant hot water generator), but also on the temperature drop undergone by water while flowing along the water feeding duct from the boiler to the product. Such temperature drop varies, among the other things, according to the operating conditions of the appliance. In particular, the Applicant has noted that, upon the switching on of the appliance or when the appliance, even if kept on, is not used very much, the duct walls are relatively "cold" (e.g., at room temperature), so that the heated water that flows therethrough loses heat and reaches the product at a lower temperature than that of the water contained in the water heating device. In turn, when the appliance is used for producing a large number of coffee cups, one after the other, the duct walls heat up so that the heated water flowing therethrough before reaching the product undergoes a lower temperature drop and reaches the product at a temperature more or less equal to that of the water contained in the boiler. The above temperature drop, moreover, can vary on the basis of the climatic conditions of the outside environment that can also affect the temperature of the duct walls.

In this way, in conventional appliances, wherein the adjustment of the water temperature that reaches the product is carried out by a sensor adapted to measure the temperature of the water contained in the boiler, the temperature of water reaching the product changes according to the operating condition of the appliance and based on the climatic conditions of the outside environment.

Thus, in a first aspect thereof, the present invention refers to an appliance for producing hot drinks comprising

- a water heating device comprising a heat source;

- a seat adapted to receive a product for preparing the drink;

- a duct for feeding hot water from the water heating device to the seat;

- a temperature sensor associated with the water heating device;

- control means operatively associated with the temperature sensor and to the heat source for adjusting the temperature of the water contained in the device by switching on/switching off the heat source based on the temperature detected by the temperature sensor;

characterised in that it comprises a second temperature sensor associated with the hot water feeding duct and in that the control means is adapted to adjust the temperature of the water contained in the device by switching on/switching, off the heat source also based on the temperature detected by the second temperature sensor.

In the appliance of the invention, the control means is adapted to switch on and switch off the heat source and therefore, to adjust the temperature of the water contained in the water heating device based on the temperature detected by both the first sensor associated with the device and by the second sensor associated with the duct. This allows optimising the temperature of the water that reaches the product and, therefore, improving the quality of the hot drink.

In particular, the second sensor associated with the hot water feeding duct allows continuously controlling the duct temperature and adjusting the temperature of the water into the water heating device accordingly, based on the temperature drop undergone from time to time by the water flowing through the duct so as to keep the temperature of the water that reaches the product constantly within the values indicated for that product.

Advantageously, the control means is adapted to continuously control (e.g., every 0.1 or 0.01 s) the temperature detected by the first and by the second temperature sensor and, at each control, to determine an optimum temperature value at which the temperature detested by the first temperature sensor must be brought based on the temperature detected by the second sensor and to switch off/switch on the heat source so that the temperature detected by the first sensor approaches the optimum temperature determined.

The above optimum temperature value is advantageously determined by a predefined algorithm that allows obtaining the value at which the temperature detected by the first sensor must be brought, based on the temperature detected by the second sensor, in order to obtain the desired temperature for the water that reaches a predetermined type of product.

Preferably, the appliance comprises selection means to allow the user to select a desired type of product among a plurality of products.

Advantageously, the control means is adapted to determine the optimum temperature value at which the temperature detected by the first sensor must be brought based on the temperature detected by the second sensor, according to the type of product selected by the user through said selection means.

Advantageously, the first sensor is arranged inside the water heating device. This advantageously allows directly detecting the temperature of the water contained in the device. Preferably, it is arranged inside the device, in the proximity of the water outlet towards the duct. This advantageously allows directly detecting the temperature of the water coming out of the device.

According to a variant, the first sensor is arranged on the outer wall of the water heating device.

Typically, the second sensor is arranged on the outer wall of the duct, at a predetermined point along the duct.

In an embodiment, the appliance, comprises at least one further temperature sensor associated with the duct, the second sensor and said at least one further sensor being arranged in different positions ' along the duct for detecting the temperature at two different positions of the duct. According to this embodiment, the control means is advantageously adapted to switch on/switch off the heat source also based on the temperature detected by said at least one further temperature sensor. As described is detail hereinafter in the description, the choice of using one or more sensors associated with the duct could depend on various factors, among which the duct length and the duct arrangement inside the appliance relative to the water heating device containing the heat source.

Typically, the water heating device is a boiler. According to a variant, it is an instant hot water generator.

According to an embodiment of the appliance, at least one portion of the duct is in contact with (or in close proximity of) the walls of the water heating device. This advantageously allows limiting the temperature drop phenomenon of the water flowing along the duct, since portion of the duct walls, being in contact with the device walls, heats up also in the absence of hot water flowing therein. Moreover, this embodiment also allows limiting the number of sensors to be associated with a duct.

According to a variant, at least one portion of the duct passes through the water heating device. Besides limiting the water temperature drop phenomenon along the duct and the number of sensors to be associated with the same, this variant allows arranging the seat below the water heating device and thus realising a more compact appliance.

Typically, the appliance also comprises an atmospheric-pressure water tank. Advantageously, the appliance also comprises a pump for feeding water from the tank to the water heating device at a predetermined pressure.

Typically, the appliance also comprises water flow adjusting means associated with the duct, adapted to block/allow the water flow towards the seat. Typically, said means, comprises a solenoid valve.

In a second aspect thereof, the present invention relates to a method for adjusting the water .temperature in an appliance for producing hot drinks, the appliance comprising a water heating device with a heat source, a seat for containing a product for preparing the drink and a duct for feeding the water from the water heating device to the product seat, the method comprising the steps of

a) switching the heat source on for heating the water contained into the water heating device;

b) detecting the temperature of the water contained into the water heating device;

c) adjusting the temperature of the water contained in the device by switching on/switching off the heat source based on the temperature detected in step b) ;
characterised in that it also comprises a step of d) detecting a temperature associated with at least one point of the water feeding duct and in that step c) is carried out also based on the temperature detected in step d).

In step b), the temperature of the water contained in the device is advantageously determined directly (for example, by a temperature sensor housed into the device, directly in contact with the water contained therein). According to a variant, it is determined indirectly (for example, by measuring the temperature of the device walls, through a temperature sensor applied to an outer wall of the device.

Advantageously, step d) is carried out by detecting the temperature of at least one point of an outer wall of the duct.

Advantageously, step c) comprises the steps of:

c1) continuously checking the temperature detected in steps d) and b) and, upon each check,

c2) determining an optimum temperature value at which the temperature of the water contained in the device must be brought, based on the temperature detected in'step d),

c3) switching off/switching on the heat source according to the temperature detected in step b) so as to bring the temperature of the water contained in the device towards the optimum temperature value determined in step c2).

In step c2), the optimum temperature value is advantageously determined by a predefined algorithm that allows determining the value at which the temperature of the water contained in the device must be brought, based on the temperature detected in step d), in order to obtain the desired temperature for the water that reaches a predetermined product.

Further features and advantages of the present invention will appear more clearly from the following detailed description of a preferred embodiment, made with reference to the attached drawings. In such drawings,

- figure 1 shows a schematic view of a first embodiment of an appliance according to the invention;

- figure 2 shows a schematic view of a second embodiment of an appliance according to the invention;

- figure 3. shows an example of the pattern of temperature Tc1 measured by a first temperature sensor associated with the duct of an appliance according to the invention versus the parameter X1 to be used in the algorithm for calculating the optimum temperature at which the water contained in the water heating device must be brought;

- figure 4 shows an example of the pattern of temperature Tc2 measured by a second temperature sensor associated with' the duct of an appliance according to the invention versus the parameter X2 to be used in the algorithm for calculating the optimum temperature at which the water contained in the water heating device must be brought.

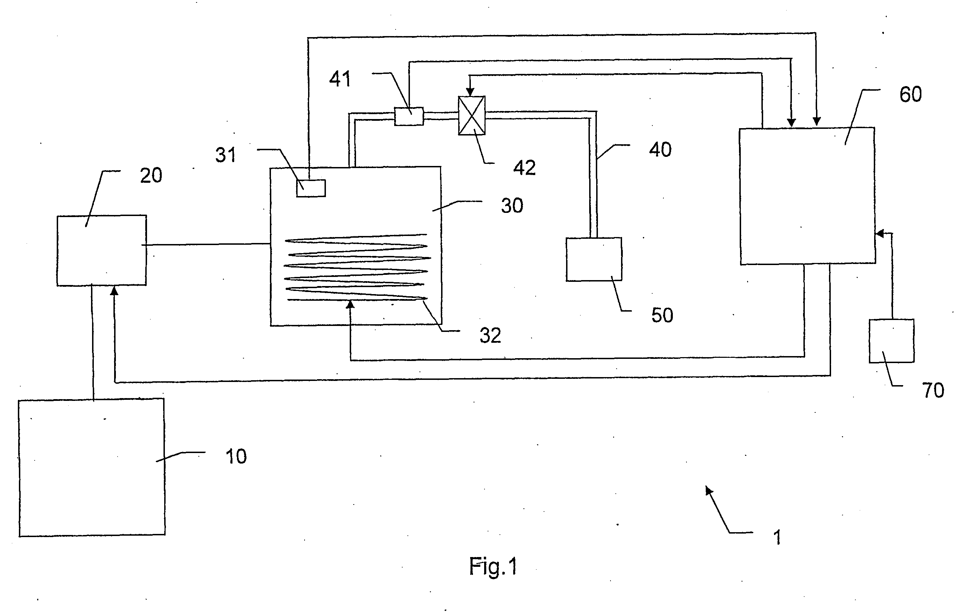

Figure 1 schematically describes an embodiment of an appliance 1 for producing hot drinks according to the invention comprising a tank 10 for containing water at atmospheric pressure, a water heating device 30 comprising a heat source 32, a pump 20 for feeding water from tank 10 to device 30, a seat 50 for containing a product for producing a hot drink, a duct 40 for feeding hot water from device 30 to seat 50, a first sensor 31 associated with device 30, a second sensor 41 associated with duct 40, a solenoid valve 42, selection means 70 and control means 60.

Device 30 can, for example, be a conventional boiler of the stagnant water type or a conventional instant hot water generator wherein water does not stagnate and is heated by flowing, for example, along a labyrinth path.

Heat source 32 typically is an armoured electrical resistance of the conventional type.

Temperature sensors 31, 41 are, for example, conventional negative temperature coefficient (NTC) probes.

In the illustrated embodiment, sensor 31 is housed into device 30 for directly detecting the temperature of the water contained in the device.

Sensor 41 is in contact with the outer wall of duct 40 at a point of the same duct 40 and is adapted to detect the duct temperature at that point.

Solenoid valve 42, pump. 20 and tank 10 are made according to conventional techniques well known in the art.

Solenoid valve 42 is adapted to block/allow the water flow along duct 40 towards seat 50.

In case of a request of production of hot drink by the user, the control means 60 is adapted to activate pump 20 so that it pumps water from tank 10 to device 30 and to open solenoid valve 42 to allow the water flow, at a pressure determined by the thrust of pump 20, towards seat 50.

The hot water is produced thanks to the arrival of hot water at a predetermined temperature (for example 90°C) and at a predetermined pressure on seat 50 and to the flow of hot water through the product contained in seat 50. An infusion pressure originates at seat 50, generated by the combination of two factors 1) thrust of pump 20 and 2) resistance offered by the product to the water flow through the same.

Device 30 advantageously comprises also a safety system (not shown) of the conventional type adapted to cut off the supply to the heat source 32 in the event of overheating of the same.

The appliance further comprises suitable indicator means (not shown) adapted to indicate to the user that the appliance is ready for use, once the optimum temperature for the water contained in device 30 is reached.

Appliance 1 can, for example, be used for producing a single hot drink, such as coffee, or more hot drinks such as coffee, tea, hot chocolate, infusions of various types, barley, hot milk, cappuccinos, milk with coffee, etc.

In this second case, appliance 1 advantageously comprises also the selection means 70 adapted to allow the user to select the desired type of hot drink, among the plurality of hot drinks that can be produced by appliance 1.

The present invention can be used for implementing any appliance for producing hot drinks such as, for example, an espresso coffee maker for a typical household or bar use or an automatic dispenser of hot drinks for a typical company use, typically working with loose powder or granule products, or an appliance for making hot drinks working with products pre-packaged into suitable wafers, capsules or bags.

Seat 50 shall therefore be shaped and manufactured according to conventional techniques so as to house the products (loose or pre-packaged) intended to be used with the type of appliance considered.

For example, according to the type of appliance considered, seat 50 can be adapted to be removed from appliance 1 to allow the user to arrange the desired product therein such as, for example, in the case of some types of espresso coffee makers for household or bar use wherein the seat is provided with a grip and is adapted to be turned into two opposed directions by the user for allowing the removal/introduction. Or, seat 50 could be incorporated in appliance 1 and could be adapted to allow the user, according to techniques well known in the art, to introduce the pre-packaged wafer or capsule product therein (such as in the case of appliances for preparing hot drinks working with pre-packaged products)' or it could be adapted to receive the loose product from special refillable containers housed into the appliance (such as in the case of automatic hot drink dispensers).

In the embodiment shown in figure 1, duct 40 starts.from device 30 to move away therefrom and ends in the proximity of seat 50, arranged laterally to device 30.

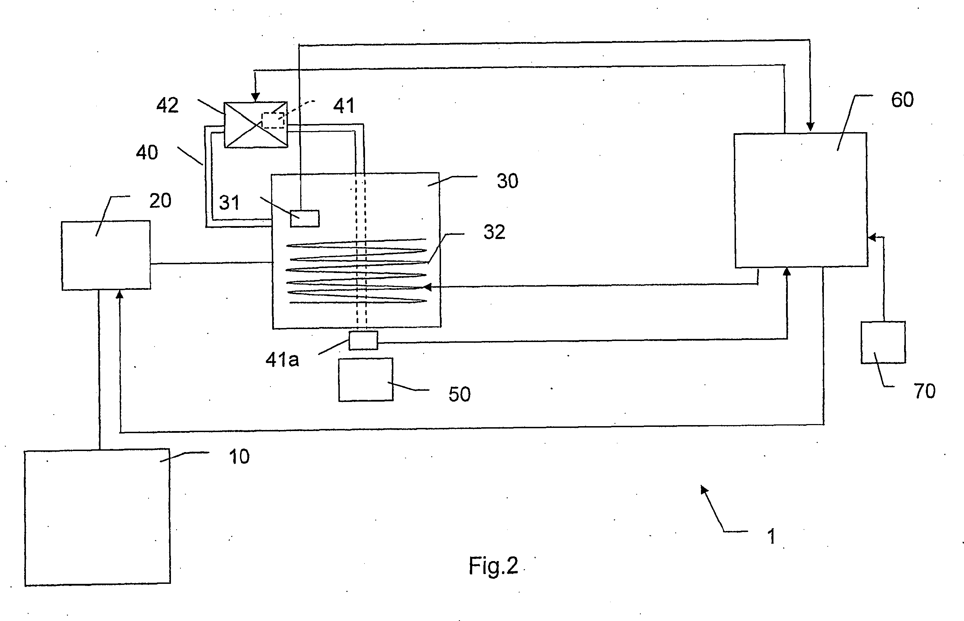

Figure 2 shows an embodiment of appliance 1 which is totally similar to that shown in figure 1 except for the fact that seat 50 is arranged below device 30 and that duct 40, which starts from device 30, ends in the proximity of seat 50 passing inside device 30.. This embodiment is advantageous because it allows obtaining a more compactly shaped appliance. Moreover, it advantageously allows limiting the temperature drop phenomenon of the water flowing along the duct, since the walls of the portion of duct 40 inside appliance 30 heat up also in the absence of hot water flow therein.

Moreover, in the embodiment shown in figure 2, there are two sensors 41 and 41a associated with the duct, one arranged inside solenoid valve 42 and the other on the end portion of duct 40, in the proximity of seat 50.

According to the present invention, the control means 60 is adapted to switch on/switch off the heat source 32 based on the temperature detected by sensors 31, 41 (and, if present, 41a).

In the particular case of a single sensor 41 associated with duct 40, as shown in figure 1, the control means 60 is adapted to store a predefined algorithm [Td=f(Tc)] that allows determining from time to time the temperature value at which temperature Td detected by sensor 31 must be brought based on temperature Tc detected each time by sensor 41, in order to obtain the optimum production temperature for the water that reaches the product that allows optimising the quality of the hot drink produced. That is, the algorithm is adapted to determine from time to time the optimum temperature value at which the temperature of the water contained in device 30 must be brought, based on the temperature detected from time to time on duct 40.

Different products can have different optimum production temperatures. For example, for coffee, the optimum production temperature range is comprised between 90 and 92 °C, for tea and other similar drinks between 80 - 85°C.

Thus, the above algorithm shall be defined based on the type of product considered. If appliance 1 shall produce a plurality of hot drinks, the control means 60 shall be adapted to store a plurality of algorithms, one for each product or set of products having the same optimum production temperature range of the hot drink. The control means 60, moreover, shall be adapted to use the appropriate algorithm according to the hot drink to be produced, for example selected by the user by the above selections means 70.

Besides being defined based on the type of product considered, the above algorithm is defined also based on other factors that affect the sensitivity of sensor 41 and the temperature drop undergone by the water that flows through duct 40 such as the position of the second sensor 41 along duct 40, the length of duct 40, the diameter of duct 40, the thickness of the walls of duct 40 and the arrangement of duct 40 inside appliance 1.

For example, in fact, a long duct 40 implies a higher temperature drop of the water flowing therethrough compared to a short duct 40, a duct 40 arranged outside and away from device 30 (as shown in figure 1) implies a higher temperature drop compared to a duct 40 arranged in contact with the walls of device 30 or inside the same (as shown in figure 2). Moreover, a sensor arranged toward the end of the duct allows detecting information on the temperature of water in the proximity of the product but can cause delays in the continuous adjustment of the water temperature due to thermal inertia. In turn, a sensor arranged at the beginning of duct 30 allows improving the continuous water temperature adjustment in terms of thermal inertia but does not directly detect information on the temperature of water in the proximity of the product.

Thus, according to the cases, it may be useful to provide for multiple sensors arranged in different positions of the duct itself in order to provide more information to the control means 60.

In the exemplifying case of two sensors 41 and 41a (such as shown in figure 2), the above algorithm shall be predefined so as to determine each time the temperature value Td at which the temperature detected by sensor 31 associated with device 30 must be brought based on temperature Tc1, Tc2 detected from time to time by the two sensors 41 and 41a associated with the duct [Td=f (Tc1, Tc2)], in order to obtain the optimum production temperature for the water that reaches the product that allows optimising the quality of the hot drink produced.

For example, considering

- a production of coffee with an optimum production temperature range comprised between 90 and 92 °C,

- a 30 cm long duct having a first portion of Teflon, about 20 cm long and external to device 30 and a second portion of stainless steel, about 10 cm long and internal to device 30 (as shown for example in figure 2), wherein the two duct portions both have outer diameter of 6mm, inner diameter of 4mm and a wall thickness of 1mm;

- a first sensor arranged inside solenoid valve 42 and a second sensor arranged on the end portion of duct 40 at a distance of about 1.5 cm from seat 50 (as shown for example in figure 2), the Applicant has experimentally determined that the optimum temperature Td at which water into device 30 must be brought based on temperature Tc1 and Tc2. respectively detected by the first 41 and second 41a sensor on the duct can be determined by the following algorithm:

$$Td = TM + [(X1*(TM-Tc1) + X2*(TM-Tc2)]$$

where TM is a constant that, in the case considered, is equal to 100°C and X1 and X2 are corrective values that vary as temperatures Tc1 and Tc2, respectively measured by the first 41 and by the second 41a sensor on the duct, vary.

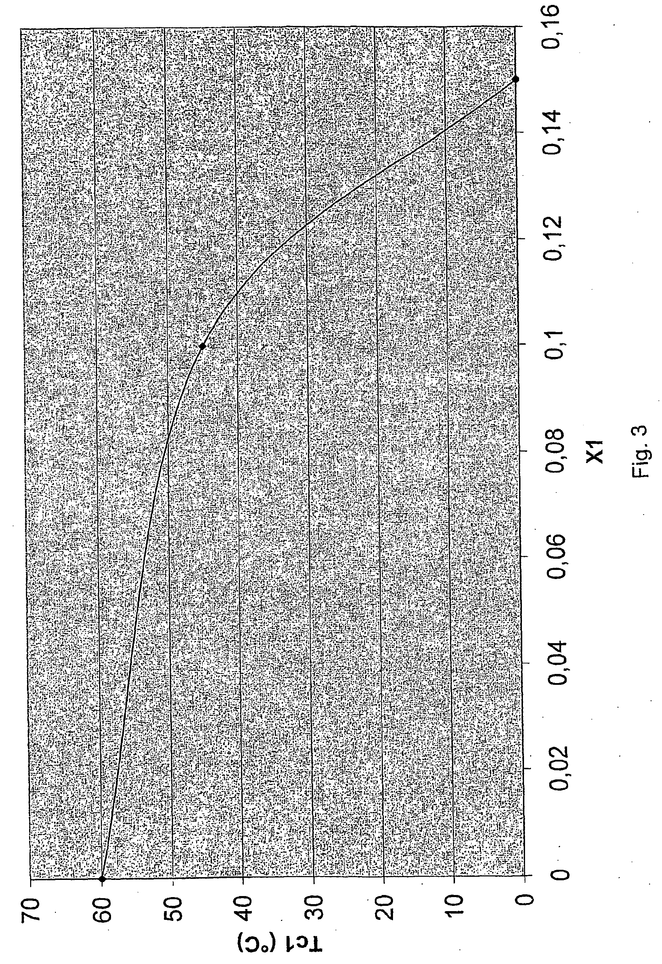

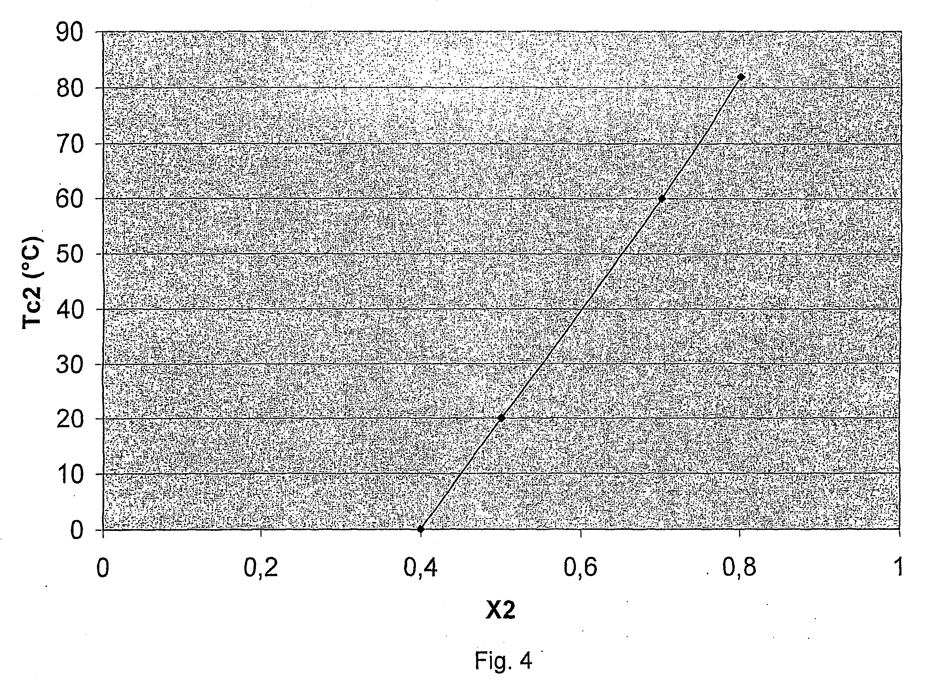

The values taken by parameters X1 and X2 in the case under consideration, versus the temperature Tc1 and Tc2 detected by the first and by the second sensor are respectively indicated in the curves experimentally obtained by the Applicant shown in figures 3 and 4.

In the case under consideration, the control means 60 shall therefore be adapted to continuously read (for example every 0.1 or 0.01 s) the value of temperatures Tc1 and Tc2 detected by the two sensors associated with the duct, to determine the values of parameters X1 and X2 from the curves shown, to calculate the optimum temperature value Td through the above algorithm and to adjust the temperature vale of the water contained in device 30 accordingly, by switching on/switching off the heat source 32.

In general, as appliance 1 is switched on, the control means 60 is adapted to switch on the heat source 32 and to start, according to the invention, a continuous process of adjustment of the temperature of water contained in device 30 based on the temperature detected by the sensor/s associated with the duct.

According to such process, the control means 60 is adapted to check the temperature detected by the sensor/s associated with the duct and, upon each check carried out, to

- determine, by the algorithm predefined for the hot drink to be produced, the optimum temperature value at which the water temperature into device 30 must be brought,

- check the temperature detected by sensor 31 associated with device 30,

- switch on (keep on) the heat source 32 if the temperature detected by sensor 31 is lower than the optimum temperature value determined and switch off (keep off) the heat source 32 if the temperature detected by sensor 31 is higher than the optimum temperature value determined, in order to bring the temperature value of the water contained in device 30 close to the optimum temperature value determined.

Thus, at the switching on of the appliance 1 or when the appliance is on but is not used by the user or is tittle used at distant time interval, when duct 30 (or at least the portion thereof external to device 30 and not in contact with the walls of device 30) is "cold" (e.g., at room temperature) due to the absence or poor flow of hot water therein, water into device 30 is kept at a higher temperature that takes into account the higher temperature drop undergone by the water flowing through the "cold" duct 30. In turn, in case of frequent use of the appliance, when the duct walls heat up thanks to the almost continuous flow of hot water therein, water in device 30 is kept at a lower temperature that takes, into account the lower temperature drop undergone by the water flowing through the "hot" duct 30.

As a consequence, thanks to a continuous adjustment of the water contained into device 30 based on the temperature continuously detected on duct 40, the appliance 1 of the invention allows keeping the temperature of the water that reaches the product constantly within the optimum temperature range for that specific product.

This allows excellent quality hot drinks to be constantly obtained and hot drinks to be always produced almost at the same temperature, irrespective of the operating conditions of the appliance and of the climatic conditions of the outside environment.

The Applicant notes that the appliance of the invention allows achieving these advantages without substantially affecting the cost of the same. In fact, compared to known appliances, it only requires the use of at least one further temperature sensor associated with the duct (which is a standard product available on the market at very low cost) and the use of control means (e.g., a microprocessor), already present in a conventional appliance, for implementing the adjustment of the water temperature according to the method of the invention.

The Applicant further notes that according to the type of appliance considered (for example, in the case of automatic hot drink dispensers and of espresso coffee makers for bars), the appliance of the invention can comprise a plurality of seats for producing a plurality of drinks and a single duct or multiple ducts for feeding water to the various seats.

In the case of multiple ducts, the appliance can comprise at least one temperature sensor associated with each duct, or with a portion thereof, and the control means shall be adapted to set the temperature of the water contained in the device based on the temperature detected by the temperature sensor associated with the duct that feeds the water to the seat from time to time used.

It is noted that in the case where one or more of such seats is used for producing a hot drink for which the production water temperature is not critical, the temperature, of the water that reaches such seat/s could be adjusted by using only the temperature sensor 31 associated with the water heating device 30 and the use of one or more temperature sensors associated with the duct/s for feeding water to such seat/s could be avoided.

Moreover, the Applicant notes that according to the type of appliance considered, the appliance of the invention can comprise one or more ducts intended for the simple dispensing of hot water. Also in this case, where a fine adjustment of the temperature of the hot water dispensed is not required, the temperature adjustment could be carried out using only the temperature sensor 31 associated with the water heating device 30, without the need of associating any temperature sensor to such duct/s.

On the other hand, in case of multiple seats and a single duct, a suitable number of temperature sensors to be associated with the single duct and a suitable arrangement of the various sensors therealong shall have to be provided, so as to be able to determine an optimum value to which the temperature of the water contained in the device should be brought which should allow obtaining, for the water that reaches each seat, the desired production temperature for a preselected product.

**Claims**

1. Appliance (1) for producing hot drinks comprising

   - a water heating device (30) comprising a heat source (32);
   - a seat (50) adapted to receive a product for preparing the drink;
   - a duct (40) for feeding hot water from the water heating device (30) to the seat (50);
   - a first temperature sensor (31) associated with the water heating device (30);
   - control means (60) operatively associated with the temperature sensor (31) and with the heat source (32) for controlling the temperature of the water contained in the device (30) by switching on/switching off the heat source (32) based on the temperature detected by the first temperature sensor (31);
   - a second temperature sensor (41) associated with the hot water feeding duct (40),
   the control means (60) being adapted to control the temperature of the water contained in the device (30) by switching on/switching off the heat source (32) also based on the temperature detected by the second temperature sensor (41) and
   to continuously check the temperature detected by the first (31) and by the second (41) temperature sensor, **characterized in that**, at each check, the control means (60) is adapted to determine an optimum temperature value at which the temperature detected by the first temperature sensor (31) must be brought based on the temperature detected by the second sensor (41), and to switch off/switch on the heat source (32) so that the temperature detected by the first sensor (31) approaches the optimum temperature determined.

2. Appliance according to claim 1, wherein the control means (60) is adapted to determine said optimum temperature value through a predefined algorithm that allows obtaining the value at which the temperature detected by the first sensor (31) must be brought, based on the temperature detected by the second sensor (41), in order to obtain the desired temperature for the water that reaches a predetermined type of product.

3. Appliance according to claim 2, further comprising selection means (70) to allow the user to select a type of product among a plurality of products.

4. Appliance according to claim 3, wherein the control means (60) is adapted to determine said optimum temperature value at which the temperature detected by the first sensor (31) must be brought based on the temperature detected by the second sensor (41), according to the type of product selected by the user by means of the selection means (70).

5. Appliance according to any of claims 1 to 4, comprising at least one further temperature sensor (41a) associated with the duct, the second sensor (41) and said at least one further sensor (41a) being arranged in different positions along the duct (40) for detecting the temperature at two different positions of the duct (40).

6. Appliance according to claim 5, wherein the control means (60) is adapted to adjust the temperature of the water detected by the first temperature sensor (31) by switching on/switching off the heat source (32) also based on the temperature detected by said at least one further temperature sensor (41a).

7. Appliance according to any of claims 1 to 6, wherein at least one portion of the duct (40) is in contact with the walls of the water heating device (30).

8. Appliance according to any of claims 1 to 6, wherein at least one portion of the duct (40) passes through the water heating device (30).

9. Appliance according to any of claims 1 to 8, further comprising a water tank (10) at atmospheric pressure.

10. Appliance according to claim 9, further comprising a pump (20) for feeding water from the tank (10) to the water heating device (30) at a predetermined pressure.

11. Method for adjusting the water temperature in an appliance (1) for producing hot drinks, the appliance (1) comprising a water heating device (30) with a heat source (32), a seat (50) for containing a product for preparing the drink and a duct (40) for feeding the water from the device (30) to the seat (50), the method comprising the steps of

   a) switching the heat source (32) on for heating the water contained into the water heating device (30);
   b) detecting the temperature of the water contained into the water heating device (30) by means of a first temperature sensor (31);

c) adjusting the temperature of the water contained in the device (30) by switching on/switching off the heat source (32) based on the temperature detected in step b);

d) detecting a temperature associated with at least one point of the water feeding duct (40) by means of a second temperature sensor (41);

wherein step c) is carried out also based on the temperature detected in step d) and comprises the step of ÷

c1) continuously checking the temperature detected in steps d) and b),

**characterized in that** at each check, step c) further comprises:

c2) determining an optimum temperature value at which the temperature of the water detected by the first temperature sensor (31) must be brought, based on the temperature detected in step d) by the second temperature sensor (41), and

c3) switching off/switching on the heat source (32) so as to bring the temperature of the water detected by the first temperature sensor (31) towards the optimum temperature value determined in step c2).

12. Method according to claim 11; wherein in step c2), the optimum temperature value is determined by a predefined algorithm that allows determining the value at which the temperature of the water detected by the first temperature sensor (31) must be brought, based on the temperature detected in step d) by the second temperature sensor (41), in order to obtain the desired temperature for the water that reaches a predetermined type of product.

**Patentansprüche**

1. Vorrichtung (1) zum Herstellen von Heißgetränken, mit:

- einer Wasseraufheizeinrichtung (30) mit einer Heizquelle (32);
- einer Aufnahme (50), die dazu geeignet ist, ein Produkt zum Herstellen des Getränks aufzunehmen;
- einer Leitung (40) zum Zuführen von Heißwasser von der Wasseraufheizeinrichtung (30) zur Aufnahme (50) ;
- einem der Wasseraufheizeinrichtung (30) zugeordneten ersten Temperatursensor (31);
- einer mit dem ersten Temperatursensor (31) und der Heizquelle (32) betrieblich verbundenen Steuereinrichtung (60) zum Steuern der Temperatur des in der Einrichtung (30) enthaltenen Wassers durch Ein-/Ausschalten der Heizquelle (32) basierend auf der durch den ersten Temperatursensor (31) erfassten Temperatur; und
- einem der Heißwasserzufuhrleitung (40) zugeordneten zweiten Temperatursensor (41);

wobei die Steuereinrichtung (60) dazu geeignet ist, die Temperatur des in der Einrichtung (30) enthaltenen Wassers durch Ein-/Ausschalten der Heizquelle (32) auch basierend auf der durch den zweiten Temperatursensor (41) erfassten Temperatur zu steuern und die durch den ersten Temperatursensor (31) und den zweiten Temperatursensor (41) erfasste Temperatur kontinuierlich zu prüfen;

**dadurch gekennzeichnet, dass**
die Steuereinrichtung (60) dazu geeignet ist, bei jedem Prüfvorgang einen optimalen Temperaturwert, auf den die durch den ersten Temperatursensor (31) erfasste Temperatur gebracht werden muss, basierend auf der durch den zweiten Temperatursensor (41) erfassten Temperatur zu bestimmen und die Heizquelle (32) derart aus- und einzuschalten, dass die durch den ersten Temperatursensor (31) erfasste Temperatur sich dem bestimmten optimalen Temperaturwert annähert.

2. Vorrichtung nach Anspruch 1, wobei die Steuereinrichtung (60) dazu geeignet ist, den optimalen Temperaturwert durch einen vordefinierten Algorithmus zu bestimmen, der es ermöglicht, den Wert, auf den die durch den ersten Temperatursensor (31) erfasste Temperatur gebracht werden muss, basierend auf der durch den zweiten Temperatursensor (41) erfassten Temperatur zu erhalten, um die gewünschte Temperatur für das Wasser zu erhalten, das einen vorgegebenen Produkt erreicht.

3. Vorrichtung nach Anspruch 2, ferner mit einer Auswahleinrichtung (70), die es einem Benutzer ermöglicht, einen Produkttyp unter mehreren Produkten auszuwählen.

4. Vorrichtung nach Anspruch 3, wobei die Steuereinrichtung (60) dazu geeignet ist, den optimalen Temperaturwert, auf den die durch den ersten Temperatursensor (31) erfasste Temperatur gebracht werden muss, basierend auf der durch den zweiten Temperatursensor (41) erfassten Temperatur gemäß dem durch den Benutzer mit Hilfe der Auswahleinrichtung (70) ausgewählten Produkttyp zu bestimmen.

5. Vorrichtung nach einem der Ansprüche 1 bis 4, mit mindestens einem der Leitung zugeordneten weiteren Temperatursensor (41a), wobei der zweite Temperatursensor (41) und der mindestens eine weitere Temperatursensor (41a) an verschiedenen Positionen entlang der Leitung (40) angeordnet sind, um die Temperatur an zwei verschiedenen Positionen der Leitung (40) zu erfassen.

6. Vorrichtung nach Anspruch 5, wobei die Steuereinrichtung (60) dazu geeignet ist, die durch den ersten Temperatursensor (31) erfasste Temperatur des Wassers durch Ein-/Ausschalten der Heizquelle (32) auch basierend auf der durch den mindestens einen weiteren Temperatursensor (41a) erfassten Temperatur einzustellen.

7. Vorrichtung nach einem der Ansprüche 1 bis 6, wobei mindestens ein Abschnitt der Leitung (40) mit den Wänden der Wasseraufheizeinrichtung (30) in Kontakt steht.

8. Vorrichtung nach einem der Ansprüche 1 bis 6, wobei mindestens ein Abschnitt der Leitung (40) sich durch die Wasseraufheizeinrichtung (30) erstreckt.

9. Vorrichtung nach einem der Ansprüche 1 bis 8, ferner mit einem unter Atmosphärendruck stehenden Wasserbehälter (10).

10. Vorrichtung nach Anspruch 9, ferner mit einer Pumpe (20) zum Zuführen des Wassers vom Behälter (10) mit einem vorgegebenen Druck zur Wasseraufheizeinrichtung (30).

11. Verfahren zum Einstellen der Wassertemperatur in einer Vorrichtung (1) zum Herstellen von Heißgetränken, wobei die Vorrichtung (1) eine Wasseraufheizeinrichtung (30) mit einer Heizquelle (32), eine Aufnahme (50) zum Aufnehmen eines Produkts zum Herstellen des Getränks und eine Leitung (40) zum Zuführen des Wassers von der Einrichtung (30) zur Aufnahme (50) aufweist, wobei das Verfahren die Schritte aufweist:

a) Einschalten der Heizquelle (32) zum Erwärmen des in der Wasseraufheizeinrichtung (30) enthaltenen Wassers;
b) Erfassen der Temperatur des in der Wasseraufheizeinrichtung (30) enthaltenen Wassers durch einen ersten Temperatursensor (31);
c) Einstellen der Temperatur des in der Einrichtung (30) enthaltenen Wassers durch Ein-/Ausschalten der Heizquelle (32) basierend auf der in Schritt b) erfassten Temperatur; und
d) Erfassen einer Temperatur, die mindestens einer Stelle der Wasserzufuhrleitung (40) zugeordnet ist, durch einen zweiten Temperatursensor (41);
wobei Schritt c) auch basierend auf der in Schritt d) erfassten Temperatur ausgeführt wird; und
wobei das Verfahren ferner den Schritt aufweist:

c1) kontinuierliches Prüfen der in den Schritten d) und b) erfassten Temperaturen;
**dadurch gekennzeichnet, dass**
Schritt c) bei jedem Prüfvorgang ferner die Schritte aufweist:
c2) Bestimmen eines optimalen Temperaturwertes, auf den die durch den ersten Temperatursensor (31) erfasste Temperatur des Wassers gebracht werden muss, basierend auf der in Schritt d) durch den zweiten Temperatursensor (41) erfassten Temperatur; und
c3) Aus-/Einschalten der Heizquelle (32) derart, dass die durch den ersten Temperatursensor (31) erfasste Temperatur des Wassers zu dem im Schritt c2 bestimmten optimalen Temperaturwert hin gebracht wird.

12. Verfahren nach Anspruch 11, wobei in Schritt c2) der optimale Temperaturwert durch einen vordefinierten Algorithmus bestimmt wird, der die Bestimmung des Wertes ermöglicht, auf den die durch den ersten Temperatursensor (31) erfasste Temperatur des Wassers gebracht werden muss, basierend auf der in Schritt d) durch den zweiten Temperatursensor (41) erfassten Temperatur, um die gewünschte Temperatur für das Wasser zu erhalten, das einen vorgegebenen Produkttyp erreicht.

**Revendications**

1. Appareil (1) de production de boissons chaudes comprenant

a) un dispositif de chauffage d'eau (30) comprenant une source de chaleur (32);

b) un siège (50) adapté pour recevoir un produit pour préparer la boisson;

c) un conduit (40) pour alimenter le siège (50) en eau chaude depuis le dispositif de chauffage d'eau (30);

d) une première sonde de température (31) associée au dispositif de chauffage d'eau (30);

e) des moyens de contrôle (60) associés opérationnellement à la sonde de température (31) et à la source de chaleur (32) pour contrôler la température de l'eau contenue dans le dispositif (30) en allumant/éteignant la source de chaleur (32) sur la base de la température détectée par la première sonde de température (31);

f) une seconde sonde de température (41) associée au conduit (40) d'alimentation en eau chaude;

les moyens de contrôle (60) étant adaptés pour contrôler la température de l'eau contenue dans le dispositif (30) en allumant/éteignant la source de chaleur (32) sur la base également de la température détectée par la seconde sonde de température (41) et vérifier en permanence la température détectée par la première (31) et par la seconde (41) sonde de température, **caractérisé en ce que**, à chaque vérification, les moyens de contrôle (60) sont adaptés pour déterminer une valeur de température optimale à laquelle la température détectée par la première sonde de température (31) doit être amenée sur la base de la température détectée par la seconde sonde (41), et à éteindre/allumer la source de chaleur (32) pour que la température détectée par la première sonde (31) approche la température optimale déterminée.

2. Appareil selon la revendication 1, dans lequel les moyens de contrôle (60) sont adaptés pour déterminer ladite valeur de température optimale au travers un algorithme prédéfini qui permet l'obtention de la valeur à laquelle la température détectée par la première sonde (31) doit être amenée, sur la base de la température détectée par la seconde sonde (41), afin d'obtenir la température désirée pour l'eau qui atteint un type de produit prédéterminé.

3. Appareil selon la revendication 2, comprenant également des moyens de sélection (70) pour permettre à l'utilisateur de sélectionner un type de produit parmi une pluralité de produits.

4. Appareil selon la revendication 3, dans lequel les moyens de contrôle (60) sont adaptés pour déterminer ladite valeur de température optimale à laquelle la température détectée par la première sonde (31) doit être amenée sur la base de la température détectée par la seconde sonde (41), selon le type de produit sélectionné par l'utilisateur au moyen des moyens de sélection (70).

5. Appareil selon l'une quelconque des revendications 1 à 4, comprenant au moins une sonde de température supplémentaire (41a) associée au conduit, la seconde sonde (41) et ladite au moins une sonde supplémentaire (41a) étant disposées en différentes positions le long du conduit (40) pour détecter la température à deux positions différentes du conduit (40).

6. Appareil selon la revendication 5, dans lequel les moyens de contrôle (60) sont adaptés pour ajuster la température de l'eau détectée par la première sonde de température (31) en allumant/éteignant la source de chaleur (32) sur la base également de la température détectée par ladite au moins une sonde de température supplémentaire (41a).

7. Appareil selon l'une des revendications 1 à 6, dans lequel au moins une partie du conduit (40) est en contact avec les parois du dispositif de chauffage d'eau (30).

8. Appareil selon l'une des revendications 1 à 6, dans lequel au moins une portion du conduit (40) passe à travers le dispositif de chauffage d'eau (30).

9. Appareil selon l'une des revendications 1 à 8, comprenant de plus un réservoir d'eau (10) à pression atmosphérique.

10. Appareil selon la revendication 9, comprenant de plus une pompe (20) pour alimenter en eau le dispositif de chauffage d'eau (30) depuis le réservoir (10) à une pression prédéterminée.

11. Méthode pour ajuster la température de l'eau dans un appareil (1) de production de boissons chaudes, l'appareil (1) comprenant un dispositif de chauffage d'eau (30) avec une source de chaleur (32), un siège (50) pour contenir un produit pour préparer la boisson chaude et un conduit (40) pour alimenter le siège (50) en eau depuis le dispositif (30), la méthode comprenant les étapes de

a) allumer la source de chaleur (32) pour chauffer l'eau contenue dans le dispositif de chauffage d'eau (30);

b) détecter la température de l'eau contenue dans le dispositif de chauffage d'eau (30) au moyen d'une première sonde de température (31);

c) ajuster la température de l'eau contenue dans le dispositif (30) en allumant/éteignant la source de chaleur (32) sur la base de la température détectée à l'étape b);

d) détecter une température associée avec au moins un point du conduit (40) d'alimentation en eau au moyen d'une seconde sonde de température (41);

dans laquelle l'étape c) est réalisée également sur la base de la température détectée dans l'étape d) et comprend les étapes de

c1) vérifier en permanence la température détectée dans les étapes d) et b),

**caractérisé en ce que**, à chaque vérification, l'étape c) comprend également:

c2) déterminer une valeur de température optimale à laquelle la température de l'eau détectée par la première sonde de température (31) doit être amenée, sur la base de la température détectée dans l'étape d) par la seconde sonde de température (41), et

c3) éteindre/allumer la source de chaleur (32) afin d'amener la température de l'eau détectée par la première sonde de température (31) vers la valeur de température optimale déterminée dans l'étape c2).

12. Méthode selon la revendication 11, dans laquelle dans l'étape c2), la valeur de température optimale est déterminée par un algorithme prédéfini qui permet de déterminer la valeur à laquelle la température de l'eau détectée par la première sonde de température (31) doit être amenée, sur la base de la température détectée dans l'étape d) par la seconde sonde de température (41), afin d'obtenir la température désirée pour l'eau qui atteint un type de produit prédéterminé.

Fig.1

Fig.2

Fig. 3

Fig. 4

EP 1 898 757 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6164189 A

- US 3100434 A